# FASCICULE DE BREVET EUROPEEN

(11) **EP 2 245 314 B1**
(45) Date de publication et mention de la délivrance du brevet: **09.05.2012**
(21) Numéro de dépôt: 09722143.6
(22) Date de dépôt: 20.02.2009
(51) Int. Cl.: F23R 3/60, F23R 3/28, F04D 29/44, F02C 3/08

(54) **DIFFUSEUR DE TURBOMACHINE COMPORTANT DES VOILES ANNULAIRES ECHANCRES**
DIFFUSOR FÜR EINEN TURBINENMOTOR MIT GEKERBTEN RINGFÖRMIGEN NETZEN
DIFFUSER FOR TURBINE ENGINE INCLUDING INDENTED ANNULAR WEBS

(30) Priorité: 27.02.2008 FR 0801059
(43) Date de publication de la demande: 03.11.2010
(73) Titulaire: Snecma, 75015 Paris (FR)
(72) Inventeur: COMMARET, Patrice, André, F-77950 Rubelles (FR); HERNANDEZ, Didier, Hippolyte, F-77720 Quiers (FR); LUNEL, Romain, Nicolas, F-77950 Montereau sur le Jard (FR)
(74) Mandataire: Ramey, Daniel
(86) Numéro de dépôt international: PCT/FR2009/000192
(87) Numéro de publication internationale: WO 2009/115690

(56) Documents cités:
- EP-A- 1 818 511
- DE-A1- 4 438 611
- GB-A- 2 093 532
- US-A1- 2002 174 657

## Description

La présente invention concerne un diffuseur pour une turbomachine et une turbomachine, telle qu'un turboréacteur ou un turbopropulseur d'avion, comportant un diffuseur agencé en amont d'une chambre annulaire de combustion, le diffuseur et la chambre de combustion étant entourés par un carter externe sensiblement cylindrique.

Un diffuseur de turbomachine peut avoir une forme générale cylindrique, ou une forme coudée en L comportant une partie amont radiale reliée à sa périphérie externe à une partie cylindrique aval, selon que le dernier étage du compresseur disposé en amont du diffuseur est un étage axial ou un étage centrifuge. Dans les deux cas, le diffuseur comprend deux voiles annulaires sensiblement parallèles qui s'étendent l'un à l'intérieur de l'autre et qui sont reliés entre eux par des aubages sensiblement radiaux. L'air qui sort du diffuseur est injecté dans une enceinte annulaire délimitée par le carter externe pour assurer l'alimentation en air de la chambre de combustion.

Le document EP-A-1 818 511 décrit un diffuseur selon le préambule de la revendication 1.

La chambre de combustion comprend deux parois de révolution, respectivement interne et externe, qui sont reliées entre elles à leurs extrémités amont par une paroi annulaire de fond de chambre sensiblement radiale. Cette paroi de fond de chambre comporte des orifices de montage de systèmes d'injection d'un mélange d'air et de carburant à l'intérieur de la chambre. Le carburant est amené par des injecteurs régulièrement répartis autour de l'axe longitudinal de la chambre et s'étendant sensiblement radialement vers l'intérieur depuis le carter externe. Chaque injecteur a une forme générale sensiblement en L et comprend un conduit radial amont qui est fixé à son extrémité radialement externe sur le carter externe et qui est relié à son extrémité radialement interne à une tête ou un nez s'étendant sensiblement axialement vers l'aval, cette tête étant engagée dans un système d'injection de mélange air/carburant.

Dans la technique actuelle, les bords périphériques aval des voiles du diffuseur sont situés à une distance relativement importante en direction axiale des conduits radiaux des injecteurs de carburant. Lors d'une opération de démontage d'un injecteur d'un moteur assemblé, cette distance ou ce jeu axial est en effet nécessaire pour déplacer en translation axiale cet injecteur vers l'amont afin de désengager sa tête axiale du système d'injection correspondant. Les injecteurs sont démontés notamment pour enlever les dépôts de suie et de coke sur les têtes des injecteurs, qui pourraient gêner l'alimentation en carburant de la chambre. Cependant, le jeu axial précité qui n'a aucune influence sur l'alimentation en air de la chambre de combustion, entraîne une augmentation de la longueur ou dimension axiale de la turbomachine et donc une augmentation de la masse de la turbomachine, ce qui est toujours préjudiciable dans l'industrie aéronautique.

L'invention a notamment pour but d'apporter une solution simple, efficace et économique à ces problèmes.

Elle propose à cet effet une diffuseur pour une turbomachine, comprenant deux voiles annulaires s'étendant l'un à l'intérieur de l'autre et reliés entre eux par des aubages sensiblement radiaux, caractérisé en ce que le bord périphérique aval d'au moins un des voiles comporte des échancrures régulièrement réparties autour de l'axe longitudinal du diffuseur.

Le diffuseur peut être du type axial et comporter deux voiles sensiblement cylindriques et parallèles entre eux, ou faire partie d'un ensemble diffuseur-redresseur, cet ensemble comportant deux voiles à section sensiblement en L.

L'invention propose également une turbomachine, telle qu'un turboréacteur ou un turbopropulseur d'avion, caractérisée en ce qu'elle comprend un diffuseur annulaire tel que décrit ci-dessus et une chambre annulaire de combustion agencée en aval du diffuseur et à l'intérieur d'un carter externe de la turbomachine, la chambre de combustion étant alimentée en carburant par des injecteurs disposés entre le diffuseur et la chambre et s'étendant sensiblement radialement vers l'intérieur depuis le carter externe, les échancrures du bord périphérique aval du ou de chaque voile du diffuseur étant alignées en direction axiale avec les injecteurs de façon à permettre une translation vers l'amont de chaque injecteur dans une échancrure du ou de chaque voile pour le démontage de cet injecteur.

Selon l'invention, les échancrures des voiles du diffuseur autorisent un recul suffisant des injecteurs pour les dégager des systèmes d'injection et permettre leur démontage. Le diffuseur peut ainsi être approché axialement des injecteurs de carburant et de la chambre de combustion de façon à réduire, voire à supprimer, le jeu axial entre les bords périphériques aval des voiles du diffuseur et les conduits radiaux des injecteurs. La longueur de la turbomachine est alors diminuée de manière significative.

Le diffuseur selon l'invention peut être un diffuseur axial ou faire partie d'un ensemble diffuseur-redresseur.

Préférentiellement, les deux voiles du diffuseur comprennent au niveau de leurs bords périphériques aval des échancrures qui sont alignées radialement deux à deux d'un voile à l'autre et qui sont alignées axialement avec les injecteurs de carburant.

Les échancrures ont par exemple une forme générale en U ou en C dont l'ouverture est orientée vers l'aval. Le ou chaque voile du diffuseur peut comporter de 16 à 20 échancrures régulièrement réparties autour de l'axe longitudinal du diffuseur, selon le nombre d'injecteur de la chambre de combustion.

Ces échancrures peuvent avoir une longueur en direction axiale et une largeur en direction circonférentielle de l'ordre de 10mm environ. Les dimensions des échancrures sont notamment déterminées en fonction des dimensions des injecteurs, de façon à ce que les échancrures puissent accueillir ces injecteurs lorsqu'ils sont dans leur position reculée dans laquelle ils sont désengagés des systèmes d'injection. La longueur des échancrures est donc déterminée par la distance nécessaire pour désengager les têtes des injecteurs des systèmes d'injection, et leur largeur est déterminée par le diamètre externe ou l'encombrement transversal des conduits radiaux des injecteurs.

Avantageusement, les échancrures sont formées sur une partie d'extrémité aval du ou de chaque voile du diffuseur qui s'étend en aval des aubages, de façon à ne pas perturber l'écoulement de l'air en sortie du diffuseur. La partie d'extrémité aval du ou de chaque voile peut être renforcée et rigidifiée par au moins une surépaisseur ou un raidisseur de façon à limiter les vibrations de cette partie d'extrémité en fonctionnement. Le bord périphérique aval du ou de chaque voile peut en outre être du type à « bord tombé » et être raccordé à un rebord annulaire sensiblement radial par une zone de liaison annulaire ayant un profil arrondi en section.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une demi-vue schématique en coupe axiale d'un ensemble diffuseur-redresseur et d'une chambre de combustion d'une turbomachine selon la technique antérieure,
- la figure 2 est une vue correspondant à la figure 1 et représente une turbomachine selon l'invention,
- la figure 3 est une vue schématique en perspective de la turbomachine de la figure 2, vue de l'aval et de côté,
- la figure 4 est une vue schématique de dessus de l'injecteur de carburant et de l'ensemble diffuseur-redresseur de la figure 3,
- la figure 5 est une vue schématique partielle en coupe axiale d'un ensemble diffuseur-redresseur d'une turbomachine selon une variante de réalisation de l'invention,
- la figure 6 est une vue schématique partielle en coupe axiale d'un ensemble diffuseur-redresseur d'une turbomachine selon une autre variante de réalisation de l'invention,
- la figure 7 est une demi-vue schématique en coupe axiale d'un diffuseur axial selon l'invention et d'une chambre de combustion d'une turbomachine.

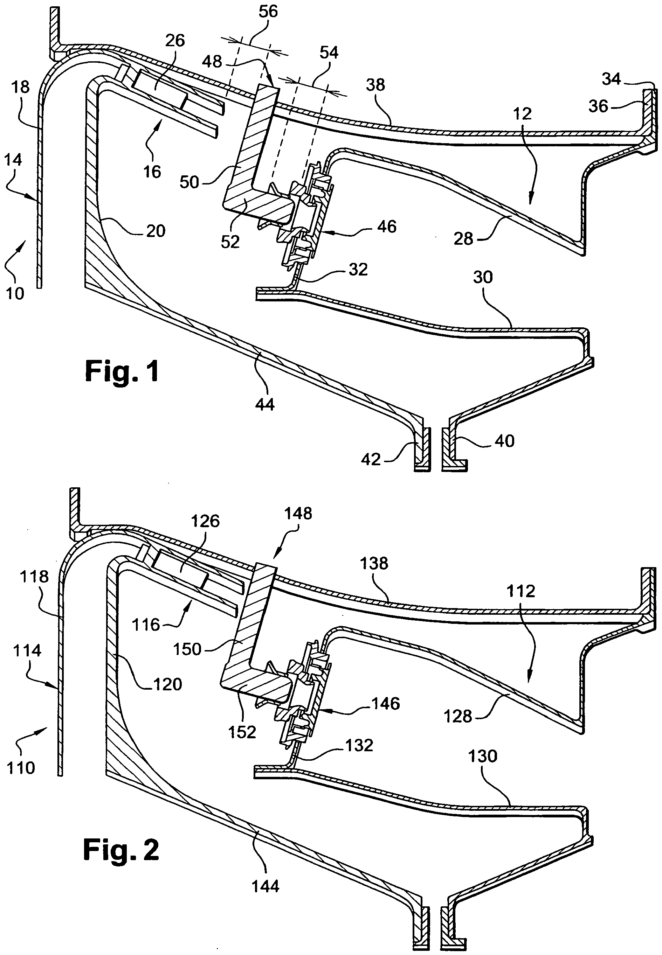

On se réfère d'abord à la figure 1 qui représente une partie d'une turbomachine, telle qu'un turboréacteur ou un turbopropulseur d'avion, comportant d'amont en aval, dans le sens de l'écoulement des gaz à l'intérieur de la turbomachine, un étage centrifuge de compresseur (non représenté), un ensemble diffuseur-redresseur 10 coudé en L et une chambre de combustion 12.

L'ensemble diffuseur-redresseur 10 comprend une partie annulaire amont 14 sensiblement radiale formant diffuseur, reliée à sa périphérie externe à une partie annulaire aval 16 sensiblement cylindrique ou tronconique formant redresseur. L'ensemble 10 définit un conduit annulaire en L dont l'entrée est alignée radialement avec la sortie de l'étage centrifuge de compresseur, et dont la sortie est orientée vers l'aval. L'air qui sort du redresseur 16 pénètre dans une enceinte annulaire délimitée par un carter externe 38 sensiblement cylindrique dans laquelle est agencée la chambre de combustion 12 pour assurer l'alimentation en air de cette chambre d'une façon bien connue de l'homme du métier.

L'ensemble 10 comporte deux voiles annulaires 18, 20 à section en L qui sont parallèles et qui sont reliés entre eux par des aubages sensiblement radiaux. Chaque voile 18, 20 comporte une partie radiale amont reliée à sa périphérie externe à une partie aval sensiblement cylindrique ou tronconique. Les parois radiales des voiles 18, 20 sont reliées entre elles par des aubages non représentés, et leurs parois cylindriques sont reliées par des aubages 26.

Dans l'exemple représenté, les aubages 26 s'étendent sur une fraction seulement de la dimension axiale des parties cylindriques des voiles 18, 20, et les parties d'extrémité de ces voiles qui s'étendent en aval des aubages 26 sont parallèles entre eux.

La chambre de combustion 12 a une forme générale annulaire et comporte deux parois de révolution coaxiales 28, 30 s'étendant l'une à l'intérieur de l'autre et reliées à leurs extrémités amont par une paroi annulaire 32 de fond de chambre.

La paroi de révolution externe 28 de la chambre est reliée à son extrémité aval à une bride annulaire 34 radialement externe de fixation à une bride annulaire 36 du carter externe 38.

La paroi de révolution interne 30 de la chambre est reliée à son extrémité aval à une bride annulaire 40 radialement interne de fixation à une bride annulaire 42 prévue à l'extrémité aval d'un flasque annulaire aval 44 de support de l'ensemble diffuseur-redresseur 10. L'extrémité amont du flasque 44 est raccordée à l'extrémité radialement interne du voile 20 de l'ensemble 10.

La paroi 32 de fond de chambre comporte des orifices de montage de systèmes 46 d'injection de mélange d'air et de carburant à l'intérieur de la chambre, l'air provenant de l'ensemble 10 et le carburant étant amené par des injecteurs 48 fixés sur le carter externe 38 et régulièrement répartis sur une circonférence autour de l'axe longitudinal de la chambre.

Chaque injecteur 48 comprend un conduit radial 50 qui s'étend radialement vers l'intérieur depuis son extrémité radialement externe fixée sur le carter externe 38. L'extrémité radialement interne du conduit radial 48 est raccordée à un nez ou à une tête 52 d'injection de carburant qui s'étend axialement vers l'aval et est engagée dans un dispositif de centrage d'un système d'injection 46.

Dans la technique actuelle, lorsque la tête d'injection 52 d'un injecteur est engagée sur une distance axiale 54 dans le dispositif de centrage du système d'injection 46, les bords périphériques aval des voiles 18, 20 de l'ensemble 10 doivent être écartés des conduits radiaux 50 des injecteurs d'un jeu axial 56 au moins égal à cette distance axiale 54. Ce jeu axial 56 est en effet nécessaire pour pouvoir déplacer en translation axiale vers l'amont l'injecteur pour le désengager du système d'injection 46. Cette opération de démontage est réalisée régulièrement sur le moteur assemblé pour nettoyer les têtes 52 des injecteurs et empêcher l'accumulation de suie et de coke sur ces têtes qui pourraient nuire à l'alimentation en carburant de la chambre 12, ou pour toute autre intervention de maintenance.

L'invention permet de réduire voire de supprimer ce jeu axial 56 grâce à des échancrures ou des encoches formées dans le bord périphérique aval d'au moins un des voiles 18, 20 de l'ensemble 10, en regard des injecteurs, ces échancrures étant destinées à recevoir les injecteurs 48 lors de leur démontage et de leur désengagement des systèmes d'injection 46.

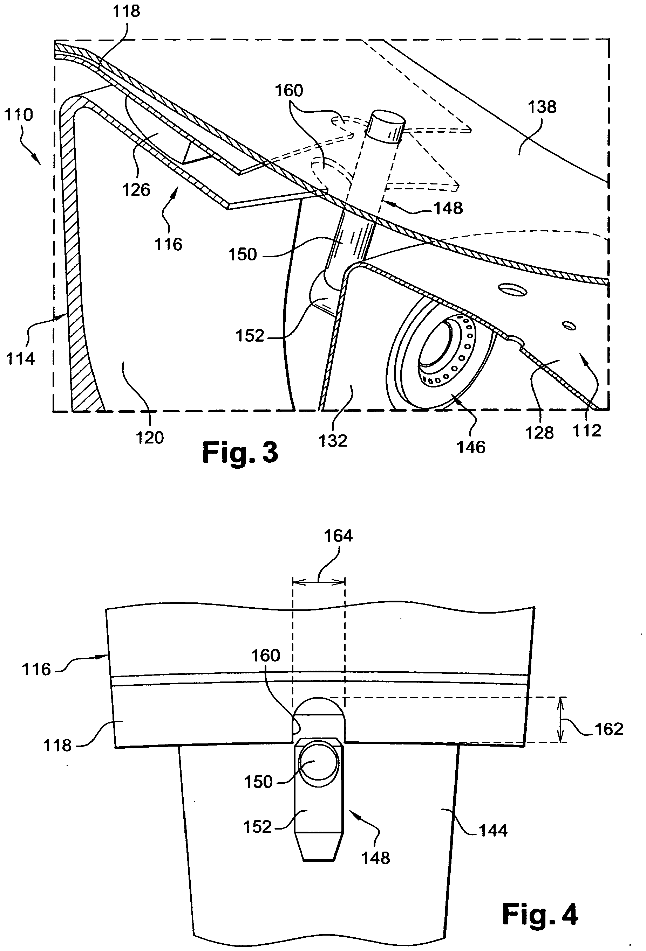

Dans l'exemple de réalisation représenté aux figures 2 à 4, chaque voile 118, 120 de l'ensemble 110 se termine au voisinage immédiat des injecteurs 148 et comporte un nombre d'échancrures 160 égal au nombre d'injecteurs de carburant 148 de la turbomachine. Chaque voile comprend par exemple entre 16 et 20 échancrures 160 régulièrement réparties autour de l'axe longitudinal de la turbomachine. Les échancrures 160 du voile interne 120 sont alignées en direction radiale avec les échancrures 160 du voile externe 118 et sont alignées en direction axiale avec les conduits radiaux 150 des injecteurs 148.

Les échancrures 160 ont une forme en U ou en C dont l'ouverture est orientée vers l'aval. Le fond de chaque échancrure a une forme générale arrondie à diamètre interne supérieur au diamètre externe du conduit radial 150 d'un injecteur de façon à ce qu'au moins une partie du conduit 150 de l'injecteur puisse être accueillie dans cette échancrure. Les échancrures ont par exemple une longueur 162 ou une dimension axiale de l'ordre de 10mm environ et une largeur 164 ou une dimension en direction circonférentielle de l'ordre de 10mm environ.

Dans l'exemple représenté, les échancrures 160 sont conformées pour recevoir les conduits 150 des injecteurs dans leur intégralité lors de leur désengagement des systèmes d'injection 146 et leur déplacement en translation axiale vers l'amont. En variante, les échancrures peuvent avoir une forme appropriée et des dimensions déterminées pour loger seulement une partie des conduits radiaux 150 des injecteurs.

Les échancrures 160 s'étendent axialement sur une majeure partie de la dimension axiale des extrémités aval des voiles 118, 120 en aval des aubages 126, les extrémités amont des échancrures 160 étant situées à distance des bords de fuite des aubages 126 de l'ensemble 110.

Avantageusement, les échancrures 160 ne sont pas formées entre les aubages radiaux 126 et ne perturbent donc pas ou très peu l'écoulement du flux d'air dans l'ensemble diffuseur-redresseur. L'alimentation en air de la chambre n'est donc pas affectée par les échancrures des voiles 118, 120 de l'ensemble.

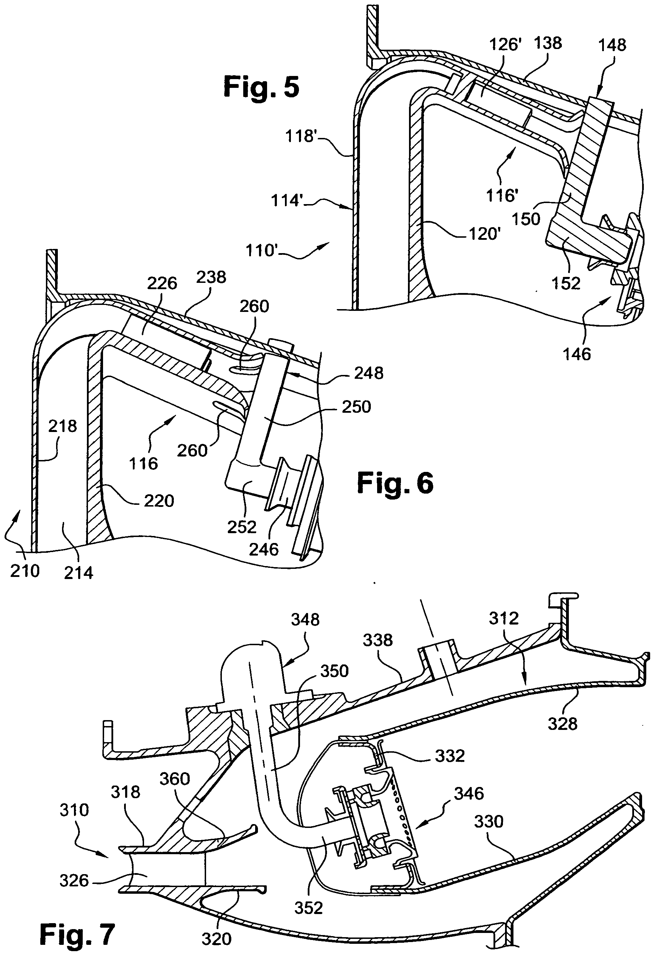

Dans la variante de réalisation représentée en figure 5, le voile externe 118' de l'ensemble comprend à son extrémité aval un rebord annulaire arrondi qui s'étend en aval sensiblement radialement vers l'extérieur. Le voile interne 120' de l'ensemble comprend à son extrémité aval un rebord annulaire arrondi qui s'étend en aval sensiblement radialement vers l'intérieur. Les rebords aval des voiles 118', 120' permettent de rigidifier l'extrémité aval de l'ensemble et de limiter en fonctionnement les déformations en flexion et les vibrations des parties d'extrémités aval de ces voiles, qui peuvent être favorisées par la présence des échancrures 160.

Dans encore une autre variante représentée en figure 6, l'épaisseur du voile interne 220 de l'ensemble 210 a été augmentée de façon à rigidifier ce voile. Le voile externe 218 de l'ensemble peut également être rigidifié de la même manière.

Dans une autre variante non représentée, les voiles interne et externe de l'ensemble peuvent être rigidifiés ou renforcés à l'aide de raidisseurs qui sont soit usinés directement sur les voiles, soit rapportés et fixés par brasage ou soudage sur ces voiles.

Les échancrures 360 de démontage des injecteurs 348 peuvent également être formées sur au moins un des bords périphériques aval des voiles 318, 320 d'un diffuseur axial 310 (voir figure 7), ce diffuseur axial étant agencé en aval d'un compresseur à sortie axiale, non représenté. Le diffuseur axial 310 comprend deux voiles 318, 320 sensiblement cylindriques qui s'étendent parallèlement l'un à l'intérieur de l'autre et qui sont reliés entre eux par des aubages 326 sensiblement radiaux. Les échancrures 360 sont dans l'exemple représenté formées sur le bord périphérique aval du voile externe 318 du diffuseur, en aval des aubages 326 de ce diffuseur. Ces échancrures 360 ne perturbent donc pas ou très peu l'écoulement du flux d'air dans le diffuseur axial. Les échancrures 360 sont alignées axialement avec les conduits radiaux 350 des injecteurs 348 et sont du même type que les échancrures décrites en référence aux figures 2 à 6.

## Revendications

1. Diffuseur (110) pour une turbomachine, destiné à être monté entre un compresseur et une chambre de combustion (112) pour l'alimentation en air de cette chambre, le diffuseur comprenant deux voiles annulaires (118, 120) s'étendant l'un à l'intérieur de l'autre et reliés entre eux par des aubages (126) sensiblement radiaux, **caractérisé en ce que** le bord périphérique aval d'au moins un des voiles comporte des échancrures (160) régulièrement réparties autour de l'axe longitudinal du diffuseur.

2. Diffuseur selon la revendication 1, **caractérisé en ce qu'**il est associé à un redresseur de façon à former un ensemble diffuseur-redresseur, les voiles (118, 120) de cet ensemble ayant en section une forme sensiblement en L.

3. Diffuseur selon la revendication 1, **caractérisé en ce qu'**il est du type axial, ses voiles (118, 120) étant sensiblement cylindriques et parallèles entre eux.

4. Turbomachine, telle qu'un turboréacteur ou un turbopropulseur d'avion, **caractérisée en ce qu'**elle comprend un diffuseur annulaire (110) selon l'une des revendications précédentes et une chambre annulaire de combustion (112) agencée en aval du diffuseur et à l'intérieur d'un carter externe (138) de la turbomachine, la chambre de combustion étant alimentée en carburant par des injecteurs (148) disposés entre le diffuseur et la chambre et s'étendant sensiblement radialement vers l'intérieur depuis le carter externe, les échancrures (160) du bord périphérique aval du ou de chaque voile du diffuseur étant alignées en direction axiale avec les injecteurs de façon à permettre une translation vers l'amont de chaque injecteur dans une échancrure du ou de chaque voile pour le démontage de cet injecteur.

5. Turbomachine selon la revendication 4, **caractérisée en ce que** les deux voiles du diffuseur (116) comprennent au niveau de leurs bords périphériques aval des échancrures (160) qui sont alignées radialement deux à deux d'un voile à l'autre et qui sont alignées axialement avec les injecteurs de carburant (148).

6. Turbomachine selon la revendication 4 ou 5, **caractérisée en ce que** les échancrures (160) ont une forme générale en U ou en C dont l'ouverture est orientée vers l'aval.

7. Turbomachine selon l'une des revendications 4 à 6, **caractérisée en ce que** les échancrures (160) ont une largeur (164) en direction circonférentielle qui est sensiblement égale ou supérieure au diamètre externe des injecteurs (148).

8. Turbomachine selon l'une des revendications 4 à 7, **caractérisée en ce que** les échancrures (160) ont une longueur (162) en direction axiale sensiblement égale ou supérieure à la longueur nécessaire au désengagement des injecteurs (148).

9. Turbomachine selon la revendication 7 ou 8, **caractérisée en ce que** les échancrures (160) ont une longueur et/ou une largeur de l'ordre de 10mm environ.

10. Turbomachine selon l'une des revendications 4 à 9, **caractérisée en ce que** le ou chaque voile (118, 120) du diffuseur (116) comporte un nombre d'échancrures (160) égal au nombre d'injecteurs (148), ces échancrures étant régulièrement réparties autour de l'axe longitudinal du diffuseur.

11. Turbomachine selon l'une des revendications 4 à 10, **caractérisée en ce que** les échancrures (160) sont formées sur une partie d'extrémité aval du ou de chaque voile qui s'étend en aval des aubages (126) du diffuseur.

12. Turbomachine selon la revendication 11, **caractérisée en ce que** la partie d'extrémité aval du ou de chaque voile (118, 120) est renforcée par au moins une surépaisseur ou un raidisseur.

13. Turbomachine selon la revendication 11 ou 12, **caractérisée en ce que** le bord périphérique aval du ou de chaque voile (118, 120) est raccordé à un rebord annulaire sensiblement radial par une zone de liaison annulaire ayant en section un profil de forme arrondie.

14. Turbomachine selon l'une des revendications 4 à 12, **caractérisée en ce que** le diffuseur est un diffuseur axial ou fait partie d'un ensemble diffuseur-redresseur.

## Claims

1. Diffuser (110) for a turbine engine, intended to be mounted between a compressor and a combustion chamber (112) for feeding air to this chamber, the diffuser comprising two annular webs (118, 120) extending inside one another and connected between them by substantially radial vanes (126), **characterised in that** the downstream peripheral edge of at least one of the webs comprises indentations (160) evenly distributed around the longitudinal axis of the diffuser.

2. Diffuser according to claim 1, **characterised in that** it is associated with a straightener in such a way as to form a diffuser-straightener unit, the webs (118, 120) of this unit having a substantially L-shaped cross-section.

3. Diffuser according to claim 1, **characterised in that** it is of the axial type, its webs (118, 120) being substantially cylindrical and parallel between them.

4. Turbine engine, such as a jet engine or a turboprop engine for aircraft, **characterised in that** it comprises an annular diffuser (110) according to one of the preceding claims and an annular combustion chamber (112) arranged downstream of the diffuser and inside an external casing (138) of the turbine engine, the combustion chamber being supplied with fuel by the injectors (148) arranged between the diffuser and the chamber and extending substantially radially towards the interior from the external casing, the indentations (160) of the downstream peripheral edge of the or each web of the diffuser being aligned in the axial direction with the injectors in such a way as to allow for a translation upstream of each injector in an indentation of the or each web for the dismounting of this injector.

5. Turbine engine according to claim 4, **characterised in that** the two webs of the diffuser (116) include on their downstream peripheral edges indentations (160) which are aligned radially two-by-two from one web to the other and which are aligned axially with the fuel injectors (148).

6. Turbine engine according to claim 4 or 5, **characterised in that** the indentations (160) have a generally U- or C-shaped form of which the opening is directed downstream.

7. Turbine engine according to one of claims 4 to 6, **characterized in that** the indentations (160) have a width (164) in the circumferential direction which is substantially equal to or greater than the external diameter of the injectors (148).

8. Turbine engine according to one of claims 4 to 7, **characterised in that** the indentations (160) have a length (162) in the axial direction substantially equal to or greater than the length required for the disengaging of the injectors (148).

9. Turbine engine according to claim 7 or 8, **characterised in that** the indentations (160) have a length and/or a width of a magnitude of approximately 10mm.

10. Turbine engine according to one of claims 4 to 9, **characterised in that** the or each web (118, 120) of the diffuser (116) comprises a number of indentations (160) equal to the number of injectors (148), these indentations being evenly distributed around the longitudinal axis of the diffuser.

11. Turbine engine according to one of claims 4 to 10, **characterised in that** the indentations (160) are formed on a downstream end portion of the or each web which extends downstream of the vanes (126) of the diffuser.

12. Turbine engine according to claim 11, **characterised in that** the downstream end portion of the or each web (118, 120) is reinforced by at least one allowance or a stiffener.

13. Turbine engine according to claim 11 or 12, **characterised in that** the downstream peripheral edge of the or each web (118, 120) is connected to a substantially radial annular edge by an annular joint zone having a rounded shape cross-section profile.

14. Turbine engine according to one of claims 4 to 12, **characterised in that** the diffuser is an axial diffuser or is part of a diffuser-straightener unit.

## Patentansprüche

1. Diffusor (110) für eine Turbomaschine, der dazu bestimmt ist, zwischen einem Kompressor und einer Brennkammer (112) zur Versorgung dieser Kammer mit Luft montiert zu werden, wobei der Diffusor zwei ringförmige Abdeckungen (118, 120) aufweist, die sich ineinander erstrecken und über im wesentlichen radial verlaufende Schaufeln (126) miteinander verbunden sind, **dadurch gekennzeichnet, dass** der stromabwärtige Umfangsrand zumindest einer der Abdeckungen Aussparungen (160) aufweist, die gleichmäßig um die Längsachse des Diffusors verteilt sind.

2. Diffusor nach Anspruch 1, **dadurch gekennzeichnet, dass** ihm ein Gleichrichter zugeordnet ist, so dass eine Diffusor-Gleichrichter-Baugruppe gebildet wird, wobei die Abdeckungen (118, 120) dieser Baugruppe einen im wesentlichen L-förmigen Querschnitt haben.

3. Diffusor nach Anspruch 1, **dadurch gekennzeichnet, dass** er axial ausgeführt ist, wobei seine Abdeckungen (118, 120) im wesentlichen zylindrisch sind und parallel zueinander verlaufen.

4. Turbomaschine, wie etwa Turbostrahltriebwerk oder Turbopropellertriebwerk für Flugzeuge, **dadurch gekennzeichnet, dass** sie einen ringförmigen Diffusor (110) nach einem der vorangehenden Ansprüche und eine ringförmige Brennkammer (112) aufweist, die dem Diffusor nachgelagert und innerhalb eines Außengehäuses (138) der Turbomaschine angeordnet ist, wobei die Brennkammer über Injektoren (148) mit Brennstoff versorgt wird, die zwischen dem Diffusor und der Kammer angeordnet sind und sich vom Außengehäuse ausgehend im wesentlichen radial nach innen erstrecken, wobei die Aussparungen (160) des stromabwärtigen Umfangsrandes von der bzw. jeder Abdeckung des Diffusors in axialer Richtung mit den Injektoren so ausgerichtet sind, dass sie eine Verschiebung eines jeden Injektors nach stromaufwärts in einer Aussparung von der bzw. jeder Abdeckung zum Demontieren dieses Injektors gestatten.

5. Turbomaschine nach Anspruch 4, **dadurch gekennzeichnet, dass** die beiden Abdeckungen des Diffusors (116) im Bereich ihrer stromabwärtigen Umfangsränder Aussparungen (160) aufweisen, die paarweise von einer Abdeckung zur anderen radial ausgerichtet sind und axial mit den Kraftstoffinjektoren (148) ausgerichtet sind.

6. Turbomaschine nach Anspruch 4 oder 5, **dadurch gekennzeichnet, dass** die Aussparungen (160) eine U- bzw. C-Form haben, deren Öffnung nach stromabwärts gerichtet ist.

7. Turbomaschine nach einem der Ansprüche 4 bis 6, **dadurch gekennzeichnet, dass** die Aussparungen (160) in Umfangsrichtung eine Breite (164) haben, die im wesentlichen gleich oder größer als der Außendurchmesser der Injektoren (148) ist.

8. Turbomaschine nach einem der Ansprüche 4 bis 7, **dadurch gekennzeichnet, dass** die Aussparungen (160) in axialer Richtung eine Länge (162) haben, die im wesentlichen gleich oder größer als die Länge ist, die für die Freigabe der Injektoren (148) erforderlich ist.

9. Turbomaschine nach Anspruch 7 oder 8, **dadurch gekennzeichnet, dass** die Aussparungen (160) eine Länge und/oder eine Breite in der Größenordnung von etwa 10 mm haben.

10. Turbomaschine nach einem der Ansprüche 4 bis 9, **dadurch gekennzeichnet, dass** die bzw. jede Abdeckung (118, 120) des Diffusors (116) eine Anzahl von Aussparungen (160) aufweist, die gleich der Anzahl von Injektoren (148) ist, wobei diese Aussparungen gleichmäßig um die Längsachse des Diffusors verteilt sind.

11. Turbomaschine nach einem der Ansprüche 4 bis 10, **dadurch gekennzeichnet, dass** die Aussparungen (160) an einem stromabwärtigen Endabschnitt von der bzw. jeder Abdeckung ausgebildet sind, der sich stromabwärts der Schaufeln (126) des Diffusors erstreckt.

12. Turbomaschine nach Anspruch 11, **dadurch gekennzeichnet, dass** der stromabwärtige Endabschnitt von der bzw. jeder Abdeckung (118, 120) mit zumindest einer Überdicke oder einer Aussteifung verstärkt ist.

13. Turbomaschine nach Anspruch 11 oder 12, **dadurch gekennzeichnet, dass** der stromabwärtige Umfangsrand von der bzw. jeder Abdeckung (118, 120) über einen ringförmigen Verbindungsbereich, der im Querschnitt ein abgerundetes Profil hat, an eine im wesentlichen radial verlaufende, ringförmige Umrandung angeschlossen ist.

14. Turbomaschine nach einem der Ansprüche 4 bis 12, **dadurch gekennzeichnet, dass** der Diffusor ein axial verlaufender Diffusor ist oder Teil einer Diffusor-Gleichrichter-Baugruppe ist.
